(19) Europäisches Patentamt
European Patent Office
Office européen des brevets

(11) EP 0 778 293 B1

(12) EUROPEAN PATENT SPECIFICATION

(45) Date of publication and mention of the grant of the patent:
**27.02.2002 Bulletin 2002/09**

(51) Int Cl.[7]: **C08F 10/00**, C08F 2/00, C08F 4/602, C07B 35/02, C07C 5/03

(21) Application number: **96308715.0**

(22) Date of filing: **03.12.1996**

(54) **Process for producing olefin polymer**

Verfahren zur Herstellung von Olefinpolymeren

Procédé pour la production de polymères d'oléfines

(84) Designated Contracting States:
**DE FR GB NL**

(30) Priority: **04.12.1995 JP 31554995**
**13.11.1996 JP 30182796**

(43) Date of publication of application:
**11.06.1997 Bulletin 1997/24**

(73) Proprietor: **MITSUBISHI CHEMICAL CORPORATION**
**Chiyoda-ku, Tokyo-to (JP)**

(72) Inventors:
- **Watanabe, Akihira, Mitsubishi Chemical Corp. Yokkaichi-shi, Mie-ken (JP)**
- **Mimura, Tetsuya, Mitsubishi Chemical Corp. Yokkaichi-shi, Mie-ken (JP)**

(74) Representative: **Kyle, Diana**
**Elkington and Fife Prospect House 8 Pembroke Road**
**Sevenoaks, Kent TN13 1XR (GB)**

(56) References cited:
**EP-A- 0 288 226**
**WO-A-95/13305**
**GB-A- 2 183 245**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 778 293 B1

## Description

The present invention relates to a process for producing an olefin polymer. More specifically, the present invention relates to a process for producing an olefin polymer where an olefin is polymerized in the presence of a metallocene catalyst, in which hydrogen that has a great influence on the melt index (hereinafter referred to as "MI") of the resulting product is removed forcedly or controlled to a predetermined concentration, thereby readily obtaining an olefin polymer having a desired MI.

Olefin polymers which are typified by ethylene homopolymers and copolymers such as linear low-density polyethylenes (LLDPE) which are ethylene/alpha-olefin copolymers have been widely used as, e.g., film-forming materials.

These olefin polymers are presently produced by the polymerization of an olefin, carried out by the conventional solution, slurry, bulk or gas phase polymerization method, in the presence of a so-called Ziegler catalyst containing as main components titanium, magnesium and a halogen.

One of the important product indexes of olefin polymers is MI. The MI of an olefin polymer can be controlled, for example, by controlling the reaction temperature or the concentration of an alpha-olefin or hydrogen in a system. Of these, the concentration of hydrogen in a system has been known to greatly affect the MI of the resulting product. The expression "in a system" as used herein indicates the inside of a polymerization reactor including a circulatory system, and the same shall apply hereinafter.

In order to control the concentration of hydrogen in a system, there has been generally employed such a method that the amount of hydrogen fed into a reactor is manually or automatically changed depending upon the concentration of hydrogen in the system, measured by a measuring apparatus such as gas chromatography.

Besides the above-described Ziegler catalysts, there have recently been developed, as olefin polymerization catalysts, catalyst systems comprising a catalyst component which contains a metallocene of a metal belonging to the group IV of the long-form Periodic Table, such as zirconium or titanium, and an organoaluminum component. Since these catalyst systems are advantageous in that they can provide olefin polymers in high yields as compared with the conventional Ziegler catalysts, they are now attracting attention.

Also in the case where the polymerization of an olefin is carried out in the presence of a metallocene catalyst, the MI of the resulting product can be controlled by controlling the reaction temperature or the concentration of the alpha-olefin or hydrogen in a system as in the case where the polymerization is carried out in the presence of a Ziegler catalyst.

However, when an olefin is polymerized in the presence of a metallocene catalyst, it is necessary to carry out the polymerization under such a condition that the concentration of hydrogen is extremely low as compared with the case where a conventional Ziegler catalyst is used, in order to obtain a product having the same MI as that of a product obtainable by the use of the Ziegler catalyst. Moreover, the MI can often fluctuate greatly by a slight change in the concentration of hydrogen. Namely, since metallocene catalysts are, in general, highly dependent on the concentration of hydrogen as compared with Ziegler catalysts, the control of the concentration of hydrogen in a system is very important when metallocene catalysts are used. When the concentration of hydrogen is high, it is difficult to produce a high-molecular-weight polymer by using a metallocene catalyst, so that it becomes difficult to obtain a polymer having a desired MI.

Further, in the case where the concentration of hydrogen fluctuates due to inadequate control of the concentration of hydrogen in a system when polymerization is carried out in the presence of a metallocene catalyst, the molecular weight or molecular-weight distribution of the resulting product tends to become unstable. This is a very big problem especially in the so-called continuous polymerization method in which an olefin, starting compound, is continuously fed into a polymerization system, thereby continuously carrying out the polymerization of the olefin. This is because the unreacted olefin is usually recovered and recirculated in a polymerization reactor in the continuous polymerization method, so that the concentration of hydrogen in this circulating olefin is also needed to be taken into consideration.

This problem of the hydrogen concentration, brought about when an unreacted olefin is recirculated and reused is actualized especially in the case where a metallocene-type transition metal compound is used as a polymerization catalyst. The reason for this is as follows. When a metallocene-type transition metal compound is used as a catalyst for the polymerization of an olefin, the resulting olefin polymer often has an unsaturated bond at its terminal end. Such an unsaturated bond seems to be formed by dehydrogenation of a saturated bond which has been once formed at the terminal end of the olefin polymer. There is therefore a possibility that the hydrogen thus produced is concentrated in the circulating olefin.

For the above-described reasons, there are demanded techniques for controlling the concentration of hydrogen in a system during the polymerization of an olefin, carried out in the presence of a metallocene catalyst; for instance, techniques for maintaining the hydrogen concentration low, or techniques for removing hydrogen forcedly.

We made studies in order to find an operation method for controlling, so as to obtain a product having a

desired MI, the concentration of hydrogen which is present in a system in an extremely small amount when an olefin polymer is produced by using a metallocene catalyst. As a result, it has been found that the concentration of hydrogen which is present in an extremely small amount can be controlled by providing, in a polymerization reactor or in an external circulatory system, an apparatus which can remove the hydrogen forcedly, or allow the hydrogen to react. It has thus been made possible to obtain a desired polymer, and the present invention has been accomplished on the basis of this finding.

Namely, a process for producing an olefin polymer according to the present invention, in which an olefin is polymerized by using a polymerization apparatus comprising a polymerization reactor or vessel where an olefin polymerization catalyst comprising a metallocene-type transition metal compound is used and polymerization is conducted, and by feeding the olefin into the polymerization apparatus, wherein the improvement comprises selectively removing at least a part of hydrogen present in the polymerization apparatus during the polymerization of the olefin.

According to the present invention, the concentration of hydrogen present in an extremely small amount in a polymerization system can be readily controlled during the polymerization of an olefin carried out by using a metallocene catalyst, so that a polymer having desired product indexes can be continuously obtained.

The invention is illustrated by the accompanying drawings in which:-

Fig. 1 is a diagram showing a process (fluidized-bed reactor) employed in the method for producing an olefin polymer according to the present invention; and

Fig. 2 is a diagram showing an example of the arrangement of a hydrogenation reactor in the present invention.

<Olefin Polymerization Catalyst>

A catalyst comprising a metallocene-type transition metal compound is used as the olefin polymerization catalyst in the present invention. The expression "a catalyst comprising a metallocene-type transition metal compound" follows connotation of the wording "comprise", and accordingly means not only a catalyst consisting of only a metallocene-type transition metal compound, but also a catalyst containing a metallocene-type transition metal compound and other purposive components, for example, those components which can act advantageously to the present invention. These purposive components are, for example, organoaluminum compounds (component B) and inorganic carriers (component C).

<Metallocene-type Transition Metal Compound (Component A)>

A compound represented by the following general formula (1) or (2) can be used as the metallocene-type transition metal compound (hereinafter sometimes referred to as "component A") in the present invention:

$$R^1{}_m(CpR^2{}_n)(CpR^2{}_n)MR^3{}_2 \qquad (1)$$

$$[R^1{}_m(CpR^2{}_n)(CpR^2{}_n)MR^3R^4]+R^{5-} \qquad (2)$$

In the above formulas (1) and (2), M is a transition metal belonging to the group IV, V or VI of the long-form Periodic Table. $(CpR^2{}_n)$s, which may be the same or different, represent cyclopentadienyl or substituted cyclopentadienyl group coordinated to the transition metal M. $R^1$ represents a covalent crosslinking group whose chain is composed of an element(s) belonging to group IV of the long-form Periodic Table and with which two $(CpR^2{}_n)$s are linked at the cyclopentadienyl rings Cp. $R^2$s, which may be the same or different, are a group on the cyclopentadienyl ring Cp, and are hydrogen, a halogen, a silicon-containing group, a hydrocarbon group having 1 to 20 carbon atoms, which can contain a halogen, an alkoxy group or an aryloxy group, provided that when two $R^2$s respectively exist on two adjacent carbon atoms on the cyclopentadienyl ring, these two $R^2$s can be combined with each other at the omega-ends thereof to form a ring together with the two carbon atoms in the cyclopentadienyl ring. $R^3$s, which may be the same or different, are a group which is bonded to the transition metal M by covalent bond, and are hydrogen, a halogen, a silicon-containing group, a hydrocarbon group having 1 to 20 carbon atoms, which can contain a halogen, an alkoxy group or an aryloxy group. m is 0 or 1, and n is an integer which fulfills the condition of n + m = 5. $R^4$ is a neutral ligand coordinated to the transition metal M. $R^{5-}$ represents a counter ion which can stabilize the above metallic cation.

In the above formulas (1) and (2), M is a transition metal belonging to the group IV, V or VI of the long-form Periodic Table, for example, titanium, zirconium, hafnium, vanadium, niobium, tantalum, chromium, molybdenum and tungsten. Of these, titanium, zirconium and hafnium are preferred.

$R^1$ is a covalent crosslinking group whose chain is composed of an element(s) belonging to the group IV of the long-form Periodic Table, preferably carbon, silicon or germanium. This $R^1$ links two cyclopentadienyl rings represented by $CpR^2_n$. However, there is a case where $R^1$ does not exist (m = 0).

Preferable examples of $R^1$ include (a) alkylene groups such as methylene and ethylene groups, (b) alkylidene groups such as ethylidene, propylidene, isopropylidene, phenylmethylidene and diphenylmethylidene groups, (c) silicon-containing hydrocarbon groups, preferably silylene group, such as dimethylsilylene, diethylsilylene, dipropylsilylene, diisopropylsilylene, diphenylsilylene, methylethylsilylene, methylphenylsilylene, methylisopropylsilylene and methyl-t-butylsilylene groups, (d) germaniumcontaining hydrocarbon groups, preferably germilene group, such as dimethylgermilene, diisopropylgermilene, diphenylgermilene, methylethylgermilene, methylphenylgermilene, methylisopropylgermilene and methyl-t-butylgermilene groups, and (e) others such as alkylphosphines and amines.

$CpR^2_n$s, which may be the same or different, are cyclopentadienyl or substituted cyclopentadienyl group coordinated to the transition metal M. Namely, two $CpR^2_n$s in one compound may be the same or different in the type and number (n) of $R^2$. Further, there is a case where $R^2$ is hydrogen. In such a case, $CpR^2_n$ is unsubstituted cyclopentadienyl group (Cp). Examples of $R^2$ includes (a) hydrogen, (b) halogens (fluorine, chlorine, bromine, and iodine), (c) silicon-containing groups, preferably silyl groups, such as trimethylsilyl, triethylsilyl and triphenylsilyl groups, (d) hydrocarbon groups having 1 to 20 carbon atoms, which can contain a halogen, such as methyl, ethyl, propyl, butyl, isobutyl, pentyl, isopentyl, hexyl, heptyl, octyl, nonyl, decyl, phenyl, chloromethyl and chloroethyl groups, (e) alkoxy groups such as methoxy, ethoxy, propoxy and butoxy groups, and (f) aryloxy groups such as phenoxy, methylphenoxy and pentamethylphenoxy groups.

In the case where two $R^2$s respectively exist on two adjacent carbon atoms on cyclopentadienyl ring, these two $R^2$s can be combined with each other at the omega-ends thereof to form a ring along with the two carbon atoms on the cyclopentadienyl ring. In this case, if the ring is a carbon ring, the ring is typically a 4- to 7-membered ring, particularly a 6-membered ring from the viewpoint of the stability of the ring.

On the other hand, cyclopentadienyl ring have two pairs of two adjacent carbon atoms, so that there are two pairs of rings which can be fused with the cyclopentadienyl ring. Therefore, when one $C_6$ fused ring is formed along with $R^2$, $CpR^2_n$ becomes indenyl or a hydroindenyl, particularly tetrahydroindenyl, and when two $C_6$ fused rings are formed, $CpR^2_n$ becomes fluorenyl or a hydrofluorenyl, particularly octahydrofluorenyl.

Further, $R^2$ is not limited by the number of carbon atoms which form a fused ring composed of a desired number of members, and can also have a substituent. Therefore, there is a possibility that the excess carbon atoms and/or the substituent is present on the fused ring.

For this reason, $CpR^2_n$ includes, as a ring structure, cyclopentadienyl, indenyl, hydroindenyl, fluorenyl and hydrofluorenyl groups, and the mentioned groups having a substituent on the ring thereof. Particularly preferable examples of $R^2$ include hydrogen, methyl group, and hydrocarbon groups such that the two $R^2$s are combined with each other to form indenyl, tetrahydroindenyl, fluorenyl and octahydrofluorenyl groups.

$R^3$s, which may be the same or different, are a group which is bonded to the transition metal M by covalent bond. Examples of $R^3$ include (a) hydrogen, (b) halogens (fluorine, chlorine, bromine, and iodine), (c) silicon-containing groups, preferably silyl groups, such as trimethylsilyl, triethylsilyl and triphenylsilyl groups, (d) hydrocarbon groups having 1 to 20 carbon atoms, which can contain halogen, such as methyl, ethyl, propyl, butyl, isobutyl, pentyl, isopentyl, hexyl, heptyl, octyl, nonyl, decyl, phenyl, chloromethyl and chloroethyl groups, (e) alkoxy groups such as methoxy, ethoxy, propoxy and butoxy groups, and (f) aryloxy groups such as phenoxy, methylphenoxy and pentamethylphenoxy groups. Of these, hydrogen, chlorine and methyl group are particularly preferred.

m is 0 when two cyclopentadienyl rings are not crosslinked with $R^1$, and it is 1 when the cyclopentadienyl rings are crosslinked with $R^1$. Therefore, each n is 4 when m is 1, and it is 5 when m is 0. In the present invention, a metallocene which is crosslinked with an alkylene or silylene group is preferred. Therefore, those compounds whose m is 1 are more preferable than those compounds whose m is 0.

$R^4$ is a neutral ligand coordinated to the transition metal M, and preferably tetrahydrofuran or the like. $R^{5-}$ represents a counter anion which can stabilize a metallic cation in the above formula (2), preferably tetraphenylborate, tetra(p-tolyl)borate, carbadodecaborate, dicarbaundecaborate or the like. The catalyst of the present invention can provide both isotactic and syndiotactic polymers.

Specific examples of the above-described metallocene-type transition metal compound corresponding to the formula (1) in which M is zirconium are as follows:

(1) isopropylidene-bis(indenyl)zirconium dichloride,
(2) isopropylidene-bis(indenyl)zirconium dimethyl,
(3) isopropylidene-bis(indenyl)zirconium dihydride,
(4) isopropylidene(cyclopentadienyl)-(fluorenyl)zirconium dichloride,
(5) isopropylidene(cyclopentadienyl)-(fluorenyl)zirconium dimethyl,
(6) dimethylsilylene(cyclopentadienyl)-(fluorenyl)zirconium dimethyl,

(7) isopropylidene(cyclopentadienyl)-(fluorenyl)zirconium dihydride,
(8) methylene-bis(cyclopentadienyl)zirconium dichloride,
(9) methylene-bis(tetramethylcyclopentadienyl)zirconium dichloride,
(10) ethylene-bis(cyclopentadienyl)zirconium dichloride,
(11) isopropylidene-bis(cyclopentadienyl)zirconium dichloride,
(12) dimethylsilylene-bis(cyclopentadienyl)zirconium dichloride,
(13) methylene-bis(cyclopentadienyl)zirconium dimethyl,
(14) methylene-bis(tetramethylcyclopentadienyl)-zirconium dimethyl,
(15) ethylene-bis(cyclopentadienyl)zirconium dimethyl,
(16) isopropylidene-bis(cyclopentadienyl)zirconium dimethyl,
(17) dimethylsilylene-bis(cyclopentadienyl)zirconium dimethyl,
(18) methylene-bis(cyclopentadienyl)zirconium dihydride,
(19) ethylene-bis(cyclopentadienyl)zirconium dihydride,
(20) isopropylidene-bis(cyclopentadienyl)zirconium dihydride, and
(21) dimethylsilylene-bis(cyclopentadienyl)zirconium dihydride.

Specific examples of the metallocene-type transition metal compound corresponding to the formula (2) in which M is zirconium are as follows:

(1) isopropylidene-bis(indenyl)zirconium(chloride)-(tetraphenylborate)tetrahydrofuran complex,
(2) isopropylidene-bis(indenyl)zirconium(methyl)-(tetraphenylborate)tetrahydrofuran complex,
(3) isopropylidene-bis(indenyl)zirconium(hydride)-(tetraphenylborate)tetrahydrofuran complex,
(4) isopropylidene(cyclopentadienyl)-(fluorenyl)zirconium-(chloride)(tetraphenylborate)-tetrahydrofuran complex,
(5) isopropylidene(cyclopentadienyl)-(fluorenyl)zirconium-(chloride)(tetraphenylborate)-tetrahydrofuran complex,
(6) isopropylidene(cyclopentadienyl)-(fluorenyl)zirconium-(methyl)(tetraphenylborate)-tetrahydrofuran complex,
(7) isopropylidene(cyclopentadienyl)-(fluorenyl)zirconium-(hydride)(tetraphenylborate)-tetrahydrofuran complex,
(8) methylene-bis(cyclopentadienyl)zirconium(chloride)-(tetraphenylborate)tetrahydrofuran complex,
(9) ethylene-bis(cyclopentadienyl)-zirconium(chloride)-(tetraphenylborate)tetrahydrofuran complex,
(10) isopropylidene-bis(cyclopentadienyl)zirconium-(chloride)(tetraphenylborate)tetrahydrofuran complex,
(11) dimethylsilyl-bis(cyclopentadienyl)zirconium-(chloride)(tetraphenylborate)tetrahydrofuran complex,
(12) methylene-bis(cyclopentadienyl)zirconium(methyl)-(tetraphenylborate)tetrahydrofuran complex,
(13) ethylene-bis(cyclopentadienyl)zirconium(methyl)-(tetraphenylborate)tetrahydrofuran complex,
(14) isopropylidene-bis(cyclopentadienyl)zirconium-(methyl)(tetraphenylborate)tetrahydrofuran complex,
(15) dimethylsilyl-bis(cyclopentadienyl)zirconium-(methyl)(tetraphenylborate)tetrahydrofuran complex,
(16) methylene-bis(cyclopentadienyl)zirconium-(hydride)(tetraphenylborate)tetrahydrofuran complex,
(17) ethylene-bis(cyclopentadienyl)zirconium-(hydride)(tetraphenylborate)tetrahydrofuran complex,
(18) isopropylidene-bis(cyclopentadienyl)zirconium-(hydride)(tetraphenylborate)tetrahydrofuran complex, and
(19) dimethylsilyl-bis(cyclopentadienyl)zirconium-(hydride)(tetraphenylborate)tetrahydrofuran complex.

With respect to compounds of a metal, other than zirconium, belonging to the group IV, V or VI of the long-form Periodic Table, those compounds which correspond to the above-enumerated ones can be mentioned. In the present invention, it is also possible to use, as the olefin polymerization catalyst, the above-described metallocene-type transition metal compound along with a known solid catalyst containing as a main component titanium trichloride, or with a catalyst supported on a carrier, containing as essential components magnesium, titanium and halogen. This is why the olefin polymerization catalyst of the present invention is defined as a catalyst "comprising a metallocene-type transition metal compound".

<Organoaluminum Compound (Component B)>

The above-described metallocene-type transition metal compound itself has ethylene- or alpha-olefin-polymerizing activity. However, in the present invention, an organoaluminum compound (component B) can also be used, if necessary, as a catalytic component as mentioned previously. In the present invention, any purposive organoaluminum compound can be used as long as it is usually used in combination with a metallocene-type transition metal compound of the above-described type.

Examples of such an organoaluminum compound include organoaluminum compounds represented by the following formula

$$R^6_{3-p}AlX_p,$$

or

$$R^7_{3-q}Al(OR^8)_q$$

wherein $R^6$ and $R^7$, which may be the same or different, are a hydrocarbon residue having approximately 1 to 20 carbon atoms, $R^8$ is a hydrocarbon residue having approximately 1 to 20 carbon atoms, X is a halogen, and p and q are numbers which can fulfill the conditions of $0 \leqq p < 3$ and $0 < q < 3$, respectively, and organoaluminum compounds represented by the following general formula (3) or (4):

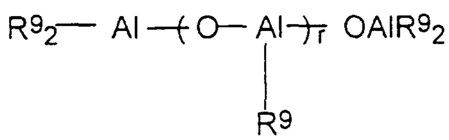

(3)

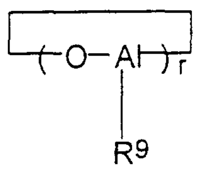

(4)

wherein r is a number of 0 to 40, preferably 2 to 25, and $R^9$ is a hydrocarbon residue, preferably one containing 1 to 10 carbon atoms, particularly one containing 1 to 4 carbon atoms.

Specific examples of the organoaluminum compound include (a) trialkylaluminums such as trimethylaluminum, triethylaluminum, triisobutylaluminum, trihexylaluminum, trioctylaluminum and tridecylaluminum, (b) alkylaluminum halides such as diethylaluminum monochloride, diisobutylaluminum monochloride, ethylaluminum sesquichloride and ethylaluminum dichloride, (c) alkylaluminum hydrides such as diethylaluminum hydride and diisobutylaluminum hydride, (d) aluminum alkoxides such as diethylaluminum ethoxide and diethylaluminum phenoxide, and (e) alumoxanes such as methylalumoxane, ethylalumoxane, isobutylalumoxane and methylisobutylalumoxane. Two or more of these organoaluminum compounds can be used in combination. Of these, trialkyl aluminums and alumoxanes are preferred.

The organoaluminum oxy compound represented by the above formula (3) or (4) is a product obtained by a reaction between one trialkylaluminum, or two or more trialkylaluminums and water. Specific examples of such a compound include methylalumoxane, ethylalumoxane, butylalumoxane, isobutylalumoxane and the like, which are obtained from one trialkylaluminum and water, and methylethylalumoxane, methylbutylalumoxane, methylisobutylalumoxane and the like, which are obtained from two trialkylaluminums and water.

Of these, methylalumoxane, isobutylalumoxane, methylisobutylalumoxane, and a mixture of any of these alumoxanes and a trialkylaluminum are preferred. Methylalumoxane and methylisobutylalumoxane are particularly preferred.

Further, it is also possible to use any of these organoaluminum oxy compounds by as being supported on a carrier such as silica gel or alumina. Of these, particularly preferred is methylaluminoxane supported on silica gel.

Of these, methylisobutylalumoxane characterized by upon analysis by $^{27}$Al-NMR, a chemical shift between 160 and 250 ppm and a line width of 3,000 Hz or more is particularly preferable for the polymerization of propylene.

These alumoxanes can be prepared under various known conditions. Specifically, the following methods can be mentioned:

(1) a method in which a trialkylaluminum is directly reacted with water in a proper organic solvent such as toluene, benzene or ether;
(2) a method in which a trialkylaluminum is reacted with a hydrate of a salt containing water of crystallization, such as a hydrate of copper sulfate or of aluminum sulfate;
(3) a method in which a trialkylaluminum is reacted with water with which silica gel or the like is impregnated;

(4) a method in which a mixture of trimethylaluminum and triisobutylaluminum is directly reacted with water in a proper organic solvent such as toluene, benzene or ether;
(5) a method in which a mixture of trimethylaluminum and triisobutylaluminum is reacted, by heating, with a hydrate of a salt containing water of crystallization, such as a hydrate of copper sulfate or of aluminum sulfate;
(6) a method in which silica gel or the like impregnated with water is treated with triisobutylaluminum, and the resultant is further treated with trimethylaluminum; and
(7) a method in which methylalumoxane and isobutyialumoxane are respectively synthesized by a known method, mixed with each other in a predetermined ratio, and reacted by heating.

<Inorganic Carrier (Component C)>

An inorganic carrier is used, when necessary, as the component C in the present invention. Specific examples of the inorganic carrier include (a) inorganic oxides such as $SiO_2$, $Al_2O_3$, MgO, $ZrO_2$, $TiO_2$, $B_2O_3$, CaO, ZnO, BaO, $ThO_2$, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO, (b) inorganic halides such as $MgCl_2$, $AlCl_3$ and $MnCl_2$, (c) inorganic salts of carbonic acid, sulfuric acid or nitric acid, such as $Na_2CO_3$, $K_2CO_3$, $CaCO_3$, $MgCO_3$, $Al_2(SO_4)_3$, $BaSO_4$, $KNO_3$ and $Mg(NO_3)_2$, (d) inorganic hydroxides such as $Mg(OH)_2$, $Al(OH)_3$ and $Ca(OH)_2$, and (e) clays, clay minerals and ion-exchangeable lamellar compounds.

Of these, those materials which are shown in the above (e) are preferred. The term "clays" is directed to clays containing as a main component an ordinary clay mineral. The term "ion-exchangeable lamellar compounds" is directed to compounds of crystalline structure in which planes formed by ionic bond or the like are laid one on another in parallel with weak binding force and which have ion-exchangeable ions. Almost all natural and synthetic clays, clay minerals and ion-exchangeable lamellar compounds can be used. Namely, clays, clay minerals, and ion-crystalline compounds of hexagonal-close-packed-type, antimony-type, $CdCl_2$-type or $CdI_2$-type lamellar crystalline structure can be used. Specific examples of clays or clay minerals, the component C, include kaolin, bentonite, ball clay, <u>gairome</u> clay (a kind of kaolin/china clay), allophane, hisingerite, pyrophyllite, talc, mica group, montmorillonite group, vermiculite, chlorite group, palygorskite, kaolinite, nacrite, dickite and halloysite. Of these, mica group, montmorillonite group and vermiculite are particularly preferred.

Specific examples of the ion-exchangeable lamellar compound, the component C, include crystalline acidic salts of a polyvalent metal such as alpha-$Zr(HPO_4)_2 \cdot H_2O$, alpha-$Zr(HOP_4)_2$, alpha-$Zr(KPO_4)_2 \cdot 3H_2O$, alpha-$Ti(HPO_4)_2$, alpha-$Ti(HAsO_4)_2 \cdot H_2O$, alpha-$Sn(HPO_4)_2 \cdot H_2O$, gamma-$Zr(HPO_4)_2$, gamma-$Ti(HPO_4)_2$ and gamma-$Ti(NH_4PO_4)_2 \cdot H_2O$.

When the component C of the present invention is a particulate material, the particle diameter thereof is preferably from 5 to 500 micrometers, particularly from 10 to 100 micrometers.

The amount of the component C used is, in general, from 40 to 99% by weight.

Further, it is preferable to subject the component C to a chemical treatment. The use of component C which has been chemically treated is one of preferable specific embodiments of the present invention. The term "chemical treatment" as used herein includes both a surface treatment by which impurities deposited on the surface of the component C can be removed, and a treatment which has an influence on the crystalline structure of a clay. Specifically, the chemical treatment includes an acid treatment, an alkali treatment, a salt treatment, and a treatment with an organic material.

When the component C is treated with an acid, impurities deposited on the surface thereof can be removed. In addition, cations in the crystalline structure, such as Al, Fe and Mg ions come out from the structure, so that the surface area of the component C is increased. When the component C is treated with an alkali, there is a possibility that the crystalline structure of the component C is destroyed and changed. When the component C is treated with a salt or organic material, ionic composites, molecular composites, organic derivatives or the like are formed. It is thus possible to change the surface area or the distance between layers.

Hydrochloric acid, sulfuric acid or nitric acid is preferred as the acid for use in the above-described acid treatment. Sodium hydroxide or potassium hydroxide is preferred as the alkali for use in the alkali treatment. A salt of Zn, Sn, Mg or Al is preferred as the salt for use in the salt treatment. An alkylamine is preferred as the organic material for use in the treatment with an organic material.

<Formation of Catalyst>

The catalytic component (component A) of the present invention can be made into an olefin polymerization catalyst by bringing the component A into contact with, as needed, components such as the above-described various components (e.g., components B and C) at the inside or outside of a polymerization vessel in the presence or absence of a monomer to be polymerized.

The components A and B can be used in any amount when a catalyst composed of the components A and

B is prepared. However, the atomic ratio (Al/M) of the aluminum atom contained in the component B to the transition metal (M) contained in the component A is generally from 1 to 10,000, preferably from 1 to 5,000, more preferably from 1 to 1,000. These components can be brought into contact with each other by any method; they can be brought into contact with each other by separately introducing them into a polymerization system when polymerization is carried out, or they can be brought into contact with each other in advance, and the resultant is used for polymerization.

The amount of the component C used is generally 40 to 99.9% by weight of the total amount of the components A and C.

It is also possible to use, when necessary, a metallocene catalyst of the present invention which has been subjected to a preliminary polymerization treatment in which a small amount of an olefin is brought into contact with the metallocene catalyst to polymerize the olefin.

Examples of the olefin for use in the above-described preliminary polymerization treatment include alpha-olefins having not more than 20 carbon atoms, such as ethylene, propylene, 1-butene, 4-methyl-1-pentene, 1-hexene, 1-octene, 1-decene, 1-dodecene and 1-tetradecene, and a mixture thereof. Of these, ethylene, propylene, butene and hexene, and a mixture thereof can be favorably used. It is enough that the percentage of the preliminarily polymerized propylene to the final polymer be generally 10% by weight or less, preferably 5% by weight or less.

The above-described preliminary polymerization can be carried out by either a batch method or a continuous method. Further, it can be carried out under either reduced or normal pressure, or under pressure. Furthermore, a molecular weight modifier such as hydrogen can also be used.

In the present invention, the polymerization of an olefin is carried out over the above-described catalytic component. At this time, an organoaluminum component (component D) can further be used together with the metallocene catalytic component fed.

Specific examples of such an organoaluminum component (component D) include (a) trialkylaluminums such as trimethylaluminum, triethylaluminum, tripropylaluminum, triisopropylaluminum, tri-n-butylaluminum, tri-tert-butylaluminum, tripentylaluminum, trioctylaluminum, tridecylaluminum, tricyclohexylaluminum and tricyclooctylaluminum, (b) dialkylaluminum halides such as dimethylaluminum chloride, diethylaluminum chloride, diethylaluminum bromide and diisobutylaluminum chloride, (c) dialkylaluminum hydrides such as diethylaluminum hydride and diisobutylaluminum hydride, (d) dialkylaluminum alkoxides such as dimethylaluminum methoxide and diethylaluminum ethoxide, and (e) dialkylaluminum aryloxides such as diethylaluminum phenoxide.

Of these, trialkyl aluminums are preferred, and triethyl aluminum and triisobutyl aluminum are particularly preferred.

[Production of Olefin Polymer]

<Outline>

The process for producing an olefin polymer according to the present invention comprises polymerizing an olefin in the presence of an olefin polymerization catalyst comprising the above-described metallocene-type transition metal compound.

The process for producing an olefin polymer according to the present invention is substantially the same as the conventional process in which an olefin polymerization catalyst of this type is used. Therefore, a polymer can be produced by means of gas phase, bulk or slurry polymerization. When a liquid or supercritical fluid is used as a polymerization medium, the polymerization of an olefin is carried out by bulk or slurry polymerization. When a gas is used as a polymerization medium, the polymerization is carried out by gas phase polymerization.

In the present invention, the "polymerization apparatus" comprises a polymerization vessel or reactor and an external circulatory system. It is needless to say that an agitator for agitating the contents of the polymerization reactor, a delivery means for a polymer produced out of the polymerization reactor, a pumping means for a fluid in the external circulatory system, and other equipments can be provided, as needed, to the polymerization apparatus in addition to the above-described two essential devices. As mentioned previously, the inside of these devices and equipments, especially the inside of the polymerization reactor and external circulatory system may be expressed by "in a system".

<Selective Removal of Hydrogen>

In the present invention, at least a part of hydrogen present in the polymerization apparatus is selectively removed. This can be done by any method, and one of the following methods is preferably employed in the present invention:

(a) a method in which a hydrogenation catalyst capable of catalytically hydrogenating olefins is used;
(b) a method in which a hydrogen-rich gas is selectively separated by allowing the gas to permeate a hydrogen-separating membrane;

(c) a method in which a solid adsorbent which can selectively adsorb hydrogen is used; and

(d) a method in which a liquid adsorbent which can selectively adsorb hydrogen is used.

The method (a) is preferred from the industrial point of view.

The method (a) will be explained hereinafter in detail.

It is noted that the expression "bringing an olefin into contact with a hydrogenation catalyst" includes not only a case where only an olefin is brought into contact with a hydrogenation catalyst, but also a case where an olefin and various materials (typically, a polymerization medium, for instance, an inert gas or solvent, and an olefin polymer produced) which may be accompanied by the olefin (including both unpolymerized, recirculated one and fresh one) are brought into contact with a hydrogenation catalyst.

According to this method (a), hydrogen present in the polymerization apparatus reacts with ethylene, starting compound, to produce ethane. As a result, the concentration of hydrogen gas in the reaction system is decreased. At this time, the amount of the ethane produced is small relative to the total amount of all gases, and, moreover, the ethane has substantially no adverse effect on the polymerization of ethylene. Therefore, there is no problem even if the ethane is allowed to remain in the system.

In the present invention, the polymerization of an olefin is carried out under such a condition that the concentration of hydrogen is being controlled so that a desired olefin polymer can be obtained, preferably being controlled to a value obtainable by the following equation:

$$C_{H2} = C_{HC} \times K_1$$

wherein $C_{H2}$ represents the molar concentration of hydrogen present in the polymerization reactor, $C_{HC}$ represents the molar concentration of an olefin having a minimum number of carbon atoms, present in the polymerization reactor, and $K_1$ is a number of 0.001 or smaller, preferably 0.0008 or smaller, more preferably 0.0005 or smaller.

The hydrogenation catalyst capable of catalytically hydrogenating olefins can be placed either inside or outside the polymerization reactor. Of these, the latter is preferred. In the latter case (that is, the hydrogenation catalyst is placed outside the polymerization reactor), it is preferable that the catalyst be placed in the external circulatory system, particularly in a by-pass system provided in the external circulatory system, especially in a by-pass system provided in the external circulatory system, wherein a compressor for a fluid in the external circulatory system is provided in the by-pass system.

In the case where the hydrogenation catalyst is placed in the by-pass system, the concentration of hydrogen can be controlled by controlling the ratio of the flow in the external circulatory system to that in the by-pass system.

It is preferable to control the ratio of the flow in the external circulatory system to that in the by-pass system so that the following equation will be valid:

$$F_B/F_R = K_2$$

wherein $F_B$ represents a flow in the by-pass system, $F_R$ represents a flow in the external circulatory system, and $K_2$ is a number of 0.05 or smaller, preferably 0.03 or smaller, more preferably 0.01 or smaller.

If circumstances require, the concentration of hydrogen can be additionally controlled by introducing hydrogen into the polymerization reactor, and by controlling the concentration of the hydrogen introduced into the polymerization reactor. As mentioned previously, when the polymerization of an olefin is carried out by using an olefin polymerization catalyst comprising a metallocene-type transition metal compound, the MI of the resulting olefin polymer can be controlled by the addition of hydrogen, and this means for controlling the MI is also useful in the present invention. However, such a means for controlling the MI does not conflict with the removal of hydrogen which is conducted in the present invention.

When the introduction of hydrogen is carried out, which is commonly conducted when a metallocene-type transition metal compound is used as a polymerization catalyst, the control of the concentration of hydrogen, which is defined in the present invention, can also be additionally conducted by controlling the amount of the hydrogen introduced.

<Hydrogenation Catalyst>

Any purposive hydrogenation catalyst, selected from conventionally known hydrogenation catalysts capable of catalytically hydrogenating olefins can be used. For example, platinum-, palladium-, chromium- and/or nickel-based

catalysts such as platinum-containing, palladium-containing, palladium-chromium-containing and nickel-containing hydrogenation catalysts, and the mentioned catalysts supported on a carrier can be desirably used in the present invention.

Of these, palladium-containing hydrogenation catalysts, in particular, those catalysts which are supported on alumina or silica, especially on alumina, are particularly preferred.

Before using any of these catalysts as the hydrogenation catalyst in the present invention, the catalyst is subjected to a treatment (drying treatment) for removing therefrom adsorbed water and the like. This treatment is carried out by thoroughly heating the catalyst while purging it, in general, with an inert gas such as nitrogen gas. After the catalyst thus treated is packed into a container, a wire net, a sintered metal filter or the like is usually placed at the both ends of the container so as to fix the catalyst packed, thereby using the catalyst as a fixed packed bed. The container to be packed with the catalyst, that is, a hydrogenation reactor, can be in any shape such as a cylindrical or rectangular shape.

For example, in the case of a palladium-based hydrogenation catalyst, a catalyst containing 0.05 to 3.0% by weight, desirably 0.05 to 2.0% by weight, more desirably 0.05 to 1.0% by weight of palladium is used. At this time, the reaction temperature is from 0 to 200°C, preferably from 10 to 90°C.

<Olefin>

Preferable examples of the olefin which can be used in the present invention include alpha-olefins having 2 to 18 carbon atoms, such as ethylene, propylene, 1-butene, 1-pentene, 1-hexene, 4-methyl-1-pentene, 3-methyl-1-pentene, 1-heptene, 1-octene, 1-nonene, 1-decene, 1-undecene, 1-dodecene, 1-tetradecene, 1-hexadecene and 1-octadecene.

In addition to the above-enumerated olefins, cyclopentene, cycloheptene, norbornene, 5-methyl-2-norbornene, styrene and vinylcyclohexene can also be mentioned.

By the process of the present invention, not only the above-described olefins can be polymerized, but also the olefins can be copolymerized with a polyene such as butadiene, isoprene, 1,4-hexadiene, dicyclopentadiene or 5-ethylidene-2-norbornene. In the case where such a polyene is used, the proportion of the polyene is 10% by weight or less, preferably from 0.1 to 5.0% by weight of the resulting copolymer.

Therefore, the word "polymerization" as used herein includes not only the polymerization of only one monomer, but also the copolymerization between two or more different monomers. Further, the word "polymer" as used herein means not only a polymer produced by using only one monomer, but also a copolymer produced by using two or more different monomers.

In the present invention, it is preferable to produce a linear low-density polyethylene (LLDPE) by copolymerizing ethylene and an alpha-olefin having 3 to 18 carbon atoms.

<Specific Embodiment (Typical Embodiment)>

By referring now to Fig. 1, the process for polymerizing an olefin, in which the circulating fluid is a gas, will be explained in detail as one embodiment of the present invention. Such a gas phase polymerization method using a fluidized-bed reactor is particularly preferred in the present invention. The present invention is applicable not only to the gas phase polymerization method but also to any other polymerization method such as the slurry, solution or bulk polymerization method. Therefore, the fluidized-bed reactor shown in Fig. 1 can be either a fluid catalytic reactor for two phases of solid-gas or solid-liquid, or a reactor for a liquid phase. Any conventionally known fluidized-bed reactor can be used. In particular, reactors employable for gas phase polymerization include both a mechanically-agitating-type fluidized-bed reactor in which agitation is mechanically conducted, and a bubbling-type fluidized-bed reactor in which a bubbling gas is dispersed by a dispersing plate to cause fluidization.

The component A previously mentioned is fed from a catalyst-feeding system 1 into an agitating-type fluidized-bed polymerization reactor 2.

During the polymerization of an olefin, a starting monomer and/or an inert gas such as nitrogen is fed from a starting-material-feeding system 4 into an external circulatory system 3, and these gases are allowed to circulate by actuating a fluid pumping means (circulating-gas compressor). Finally, the circulating gas is again blown into the agitating-type fluidized-bed polymerization reactor 2. In the polymerization reactor, a fluidized bed is formed by particles charged in advance, or polymer particles produced by polymerization, and the flowing gas comprising the starting monomer and inert gas, and an agitating element which is mechanically rotated. The agitating element is rotated forcedly by a motor 6. It is needless to say that a fluidized-bed formed by an upflowing gas can also be used besides the above-described fluidized-bed formed by using an agitating element.

In this case, the polymerization apparatus is operated, in general, under such a condition that the flowing gas contains 5 to 90% by volume of the inert gas, and 10 to 95% by volume of the starting monomer such as ethylene or

an alpha-olefin.

Olefin polymer particles can be obtained by feeding the previously mentioned component A into this fluidized bed. The polymer produced is taken out from the fluidized-bed reactor either continuously or intermittently through a drawing-out system 7.

The heat of polymerization generated by the reaction is reduced by a heat exchanger 8 provided in the external circulatory system.

The apparatus 9 is a hydrogenation reactor in which hydrogenation reaction is carried out to remove hydrogen. In the polymerization apparatus shown in Fig. 1, the hydrogenation reactor is provided in the by-pass system (herein sometimes referred to as "by-pass line") branched off from the external circulatory system. However, it is also possible to provide the hydrogenation reactor in a gas phase zone at the upper part of the fluidized-bed zone in the polymerization reactor. Further, in the case where the hydrogenation reactor is provided in the by-pass system, it is particularly preferable to provide a pumping means (circulating-gas compressor) 5 in the by-pass system as shown in Fig. 1 so as to recirculate the gas in the external circulatory system by utilizing the pressure loss caused by this pumping means. However, there can also be mentioned such an arrangement that the pumping means is placed in parallel to the external circulatory system as shown in Fig. 2.

In either case, the gas which is branched off from the external circulatory system (hereinafter sometimes referred to as "by-pass gas") is introduced into the hydrogenation reactor, and, in this reactor, hydrogen is removed by means of a chemical reaction, that is, hydrogenation. The resulting gas is then returned to the external circulatory system again. At this time, the concentration of hydrogen in the polymerization reactor can be controlled by changing the flow of the by-pass gas by adjusting the opening of a valve 10. Therefore, it is not necessary to completely remove hydrogen by the hydrogenation reactor, and the final concentration of hydrogen in the system can thus be controlled by controlling the flow of the by-pass gas.

It is preferable to maintain the ratio $K_2$ of the flow in the external circulatory system to that in the by-pass system, as defined below, be maintained at 0.05 or less, desirably 0.03 or less, more desirably 0.01 or less:

$$F_B/F_R = K_2$$

wherein $F_B$ represents a flow in the by-pass system, and $F_R$ represents a flow in the external circulatory system.

Examples of the hydrogenation catalyst include platinum-based, palladium-based, palladium-chromium-based and nickel-based hydrogenation catalysts. In the case of a palladium-based catalyst, a catalyst containing 0.05 to 3.0% by weight, desirably from 0.05 to 2.0% by weight, more desirably from 0.05 to 1.0% by weight of palladium is used, which is supported on alumina or silica, preferably on alumina.

The hydrogenation catalyst can be packed into any container. It is preferable to place a wire net or sintered metal filter at the both ends of the container so as to fix the catalyst packed. Further, the linear velocity in the hydrogenation catalytic reactor is generally from 0.01 to 1.5 m/sec, preferably from 0.01 to 1.2 m/sec, more preferably from 0.01 to 0.8 m/sec.

The pressure of the gas used is in the range of 1 to 100 $kg/cm^2$, preferably 1 to 50 $kg/cm^2$; the temperature of the gas is from 10 to 100°C, preferably from 30 to 100°C, more preferably from 50 to 100°C.

An agitator with an agitating element of ribbon, anchor or screw type can be used for agitating the inside of the polymerization reactor.

Further, it is also possible to carry out multistage polymerization by using two or more polymerization reactors of the type shown in Fig. 1, connected in series.

As mentioned previously, a fluidized bed other than the agitating-type fluidized bed can also be used in the present invention as the fluidized-bed reactor 2. As such a fluidized bed, there can be mentioned a bubbling-type fluidized bed in which a dispersing plate is used when the circulating gas is introduced into the reaction system.

As a result of the above-described procedure, the concentration of hydrogen in the polymerization reactor is controlled to a value obtainable by the following equation, and it is preferable to carry out the polymerization of an olefin under this condition:

$$C_{H2} = C_{HC} \times K_1$$

wherein $C_{H2}$ represents the molar concentration of hydrogen present in the polymerization reactor, and $C_{HC}$ represents the molar concentration of an olefin having a minimum number of carbon atoms, present in the polymerization reactor. It is preferable to maintain $K_1$ in the above equation at 0.001 or less, preferably 0.0008 or less, more preferably 0.0005 or less, particularly 0.0003 or less.

It is desirable that the MI of the olefin polymer obtained in the above-described manner be generally from

0.001 to 1,000 g/10 min, preferably from 0.01 to 10 g/10 min.

## EXAMPLES

The following examples illustrate the present invention more specifically. Therefore, the present invention is not limited to the specific description in the following examples.

### Example 1

<Preparation of Catalyst>

8 kg of commercially available montmorillonite ("Kunipia F" manufactured by Kunimine Industries Co., Ltd., Japan) was ground by a vibration ball mill, and dispersed in 56 liters of an 8.2% aqueous hydrochloric acid solution. This dispersion was stirred at 90°C for 2 hours, and then washed with desalted water.

4.6 kg of the treated montmorillonite in an aqueous slurry of was so adjusted that the solid concentration of the slurry would be 15.2%, and the resultant was spray-granulated by using a spray dryer.

Next, 9.98 g of the above-obtained montmorillonite preparation and 47 ml of toluene were placed in a 500 ml four-necked flask, and heated to 70°C. To this was added dropwise 15.4 ml of a toluene solution of triethyl aluminum (3.74 mmol/ml) over a period of 20 minutes. The mixture was then stirred at 70°C for one hour. The supernatant liquid was taken out from the flask, and the solid matter remaining in the flask was washed with toluene. Toluene was added to this solid matter to obtain a slurry, and to this slurry was added 23.6 ml of a toluene solution of bis(cyclopentadienyl) zirconium dichloride (33.8 micromol/ml). The resulting mixture was stirred at room temperature for one hour. The supernatant liquid was taken out, and the remaining solid matter was washed with toluene to obtain a polymerization catalyst.

<Preparation of Hydrogenation Catalyst>

A palladium-based catalyst ("G68C" manufactured by Nissan Girdler Catalyst Co., Ltd., Japan) was used as the hydrogenation catalyst. 92 g of this catalyst was packed into a pressure-resistant cylinder having an internal volume of 150 ml, and a sintered metal filter was placed on the both ends of the cylinder to fix the catalyst packed, thereby obtaining a catalyst-packed column. A band heater was wrapped around this packed column. The packed column was heated to 225°C with monitoring the inner temperature, and then subjected to a drying treatment with nitrogen blowing for a half day. Thereafter, the band heater was removed, and the packed column was placed before and after the fluid compressor (circulating-gas compressor) provided in the external circulatory system (see Fig. 1).

<Gas Phase Polymerization>

Gas phase polymerization was carried out by using the above-prepared polymerization catalyst and the hydrogenation-catalyst-packed column placed in the above-described manner. Namely, in the continuous gas phase polymerization apparatus shown in Fig. 1, the above-prepared polymerization catalyst and triethyl aluminum were intermittently fed at flow rates of 90 mg/hr and 285 g/hr, respectively. At the same time, ethylene and 1-hexene were fed either continuously or intermittently at flow rates of 800 g/hr and 162 ml/hr, respectively. Polymerization operation was thus conducted.

The polymerization conditions of the polymerization reactor were as follows: the pressure was 20 kg/cm$^2$, the temperature was 80°C, the average residence time was 3.5 hours, and the number of revolution of the agitating element was 60 rpm.

By adjusting the opening of the valve 10 shown in Fig. 1, 0.7% of the gas flowing in the circulatory system was introduced into the by-pass system. The flow rate of the gas flowing in the by-pass system was measured by a thermal flowmeter. Gas analysis was carried out before and after the hydrogenation-catalyst-packed column, and, as a result, it was found that 99.5% of hydrogen had been successfully removed by the hydrogenation catalyst.

Further, the gas present in the system was analyzed by means of gas chromatography. As a result, the concentrations of ethylene, 1-hexene and hydrogen were found to be 74.5% by volume, 1.8% by volume and 0.02% by volume, respectively. The density of the polymer obtained was 0.919 g/cc. The MI of the polymer was 2.1 g/10 min after 4 hours, 1.6 g/10 min after 8 hours, 1.7 g/10 min after 12 hours, and 1.7 g/10 min after 16 hours. Thus, the MI of the polymer was found to be almost constant over a long period of time. A polymer having a desired MI was thus obtained.

<Measurement of MI, Density, Gas Concentration and Hydrogen Concentration>

The MI and density of the polymer obtained were measured in accordance with JIS K7210 and JIS K7112, respectively. The gas present in the system was analyzed by means of gas chromatography: the concentrations of ethylene and 1-hexene were measured by using a gas chromatograph Model "163" manufactured by Hitachi, Ltd., Japan, and the concentration of hydrogen was measured by properly using, depending upon the concentration of hydrogen, a gas chromatograph Model "4C" (TCD-type detector) manufactured by Shimadzu Corp., Japan, or a gas chromatograph Model "263-30" (PID-type detector) manufactured by Hitachi, Ltd., Japan.

Comparative Example 1

Polymerization was carried out in the same manner as in Example 1, by using the same olefin polymerization catalyst as was used in Example 1, provided that the hydrogenation catalyst used in Example 1 was not used.

The concentrations of ethylene, 1-hexene and hydrogen in the system were found to be 74.5% by volume, 1.8% by volume and 0.05% by volume, respectively. The MI of the polymer obtained was 2.1 g/10 min after 4 hours, 3.7 g/10 min after 8 hours, 4.1 g/10 min after 12 hours, and 4.2 g/10 min after 12 hours. Thus, the MI of the polymer was found not to be constant but to increase over a time. A polymer having an undesired MI was thus obtained.

According to the present invention, as mentioned previously the concentration of hydrogen in a polymerization system can be readily controlled while an olefin is polymerized in the presence of a metallocene catalyst, so that a polymer having desired product indexes can be continuously obtained.

**Claims**

1. A process for producing an olefin polymer, wherein use is made, for polymerization of an olefin, of a polymerization apparatus having a polymerization reactor where an olefin polymerization catalyst comprising a metallocene-type transition metal compound is used and polymerization is conducted, and wherein the olefin is fed into the polymerization apparatus, **characterised in that** at least a part of hydrogen present in the polymerization apparatus is selectively removed during the polymerization of the olefin.

2. The process for producing an olefin polymer according to claim 1, wherein the polymerization apparatus has the polymerization reactor where an olefin polymerization catalyst comprising a metallocene-type transition metal compound is used and polymerization is conducted, and an external circulatory system which is in communication with the polymerization reactor, and wherein the unpolymerized olefin is circulated in the external circulatory system.

3. The process for producing an olefin polymer according to claim 1 or 2, wherein hydrogen is removed by using a hydrogenation catalyst capable of catalytically hydrogenating olefins.

4. The process for producing an olefin polymer according to claim 2, wherein the hydrogenation catalyst capable of catalytically hydrogenating olefins is placed in the external circulatory system thereby to selectively remove at least a part of the hydrogen.

5. The process for producing an olefin polymer according to claim 2, wherein the external circulatory system has a by-pass system and the hydrogenation catalyst capable of catalytically hydrogenating olefins is placed in the by-pass system provided in the external circulatory system thereby to selectively remove at least a part of the hydrogen.

6. The process for producing an olefin polymer according to claim 5, wherein the external circulatory system contains a pumping means for a fluid flowing therein, provided in the by-pass system in which the hydrogenation catalyst capable of catalytically hydrogenating olefins is placed.

7. The process for producing an olefin polymer according to claim 1 or 2, wherein the hydrogenation catalyst capable of catalytically hydrogenating olefins is placed in the polymerization reactor.

8. The process for producing an olefin polymer according to any one of claims 1 to 7, wherein the hydrogenation catalyst capable of catalytically hydrogenating olefins is based on platinum, palladium, chromium and/or nickel.

9. The process for producing an olefin polymer according to any one of claims 1 to 8, wherein the polymerization of

an olefin is carried out under such a condition that the concentration of hydrogen is being controlled to a value obtainable by the following equation:

$$C_{H2} = C_{HC} \times K_1$$

wherein $C_{H2}$ represents the molar concentration of hydrogen present in the polymerization reactor, $C_{HC}$ represents the molar concentration of an olefin having a minimum number of carbon atoms, present in the polymerization reactor, and $K_1$ is a number of 0.001 or less.

**10.** The process for producing an olefin polymer according to claim 9, wherein the concentration of hydrogen is controlled by controlling the ratio of the flow in the external circulatory system to that in the by-pass system in the process of the claim 5.

**11.** The process for producing an olefin polymer according to claim 9, wherein the concentration of hydrogen is additionally controlled by introducing hydrogen into the polymerization reactor and by controlling the concentration of the hydrogen introduced in the polymerization reactor.

**12.** The process for producing an olefin polymer according to any one of claims 1 to 11, wherein the metallocene-type transition metal compound is supported on an inorganic carrier.

**13.** The process for producing an olefin polymer according to claim 12, wherein the inorganic carrier is a clay, clay mineral or ion-exchangeable lamellar compound.

**14.** The process for producing an olefin polymer according to any one of claims 1 to 13, wherein the metallocene-type transition metal compound contains cyclopentadienyl rings which are not crosslinked with each other.

**15.** The process for producing an olefin polymer according to any one of claims 1 to 13, wherein the metallocene-type transition metal compound contains cyclopentadienyl rings which are crosslinked with each other.

**16.** The process for producing an olefin polymer according to claim 15, wherein the metallocene-type transition metal compound contains cyclopentadienyl rings which are crosslinked with a silylene group.

**17.** The process for producing an olefin polymer according to any one of claims 1 to 16, wherein the olefin polymerization catalyst is either a catalyst consisting essentially of the metallocene-type transition metal compound, or a catalyst comprising the metallocene-type transition metal compound and an organoaluminum compound in combination.

**18.** The process for producing an olefin polymer according to any one of claims 1 to 17, wherein the olefin is ethylene, or a mixture of ethylene and an alpha-olefin having 3 to 18 carbon atoms.

**Patentansprüche**

**1.** Verfahren zur Herstellung eines Olefin-Polymers, wobei zur Polymerisation eines Olefins von einer Polymerisationsapparatur Gebrauch gemacht wird, die einen Polymerisationsreaktor hat, in dem ein Olefin-Polymerisationskatalysator, der eine Übergangsmetallverbindung des Metallocen-Typs umfaßt, verwendet wird und eine Polymerisation durchgeführt wird, und wobei das Olefin in die Polymerisationsapparatur eingespeist wird, **dadurch gekennzeichnet, daß** mindestens ein Teil des Wasserstoffs, der in der Polymerisationsapparatur vorliegt, während der Polymerisation des Olefins selektiv entfernt wird.

**2.** Verfahren zur Herstellung eines Olefin-Polymers nach Anspruch 1, wobei die Polymerisationsapparatur den Polymerisationsreaktor, in dem ein Olefin-Polymerisationskatalysator, der eine Übergangsmetallverbindung des Metallocen-Typs umfaßt, verwendet wird und eine Polymerisation durchgeführt wird, und ein externes Zirkulationssystem, das mit dem Polymerisationsreaktor in Verbindung steht, aufweist, und wobei das unpolymerisierte Olefin im externen Zirkulationssystem zirkuliert.

**3.** Verfahren zur Herstellung eines Olefin-Polymers nach Anspruch 1 oder Anspruch 2, wobei Wasserstoff durch

Verwendung eines Hydrierungskatalysators, der fähig ist, Olefine katalytisch zu hydrieren, entfernt wird.

**4.** Verfahren zur Herstellung eines Olefin-Polymers nach Anspruch 2, wobei der Hydrierungskatalysator, der fähig ist, Olefine katalytisch zu hydrieren, im externen Zirkulationssystem angeordnet ist, um dadurch mindestens ein Teil des Wasserstoffs selektiv zu entfernen.

**5.** Verfahren zur Herstellung eines Olefin-Polymers nach Anspruch 2, wobei das externe Zirkulationssystem ein Bypass-System hat und der Hydrierungskatalysator, der fähig ist, Olefine katalytisch zu hydrieren, im Bypass-System angeordnet ist, das im externen Zirkulationssystem angeordnet ist, um dadurch mindestens ein Teil des Wasserstoffs selektiv zu entfernen.

**6.** Verfahren zur Herstellung eines Olefin-Polymers nach Anspruch 5, wobei das externe Zirkulationssystem ein Pumpmittel für eine Fluidströmung darin enthält, das im Bypass-System angeordnet ist, in dem der Hydrierungskatalysator, der fähig ist, Olefine katalytisch zu hydrieren, angeordnet ist.

**7.** Verfahren zur Herstellung eines Olefin-Polymers nach Anspruch 1 oder 2, wobei der Hydrierungskatalysator, der fähig ist, Olefine katalytisch zu hydrieren, im Polymerisationsreaktor angeordnet ist.

**8.** Verfahren zur Herstellung eines Olefin-Polymers nach einem der Ansprüche 1 bis 7, wobei der Hydrierungskatalysator, der fähig ist, Olefine katalytisch zu hydrieren, auf Platin, Palladium, Chrom und/oder Nickel basiert.

**9.** Verfahren zur Herstellung eines Olefin-Polymers nach einem der Ansprüche 1 bis 8, wobei die Polymerisation eines Olefins unter solchen Bedingungen durchgeführt wird, daß die Wasserstoffkonzentration auf einen Wert reguliert wird, der durch die folgende Gleichung erhältlich ist:

$$C_{H2} = C_{HC} \times K_1$$

worin $C_{H2}$ die molare Wasserstoffkonzentration, die im Polymerisationsreaktor vorliegt, darstellt, $C_{HC}$ die molare Konzentration eines Olefins, das eine minimale Anzahl an Kohlenstoffatomen hat, die im Polymerisationsreaktor vorliegt, darstellt und $K_1$ eine Zahl von 0,001 oder weniger ist.

**10.** Verfahren zur Herstellung eines Olefin-Polymers nach Anspruch 9, wobei die Wasserstoffkonzentration reguliert wird, indem das Verhältnis der Strömung im externen Zirkulationssystem zu der im Bypass-System im Verfahren des Anspruchs 5 reguliert wird.

**11.** Verfahren zur Herstellung eines Olefin-Polymers nach Anspruch 9, wobei die Wasserstoffkonzentration zusätzlich durch Einleiten von Wasserstoff in den Polymerisationsreaktor und durch Regelung der Konzentration des Wasserstoffs, der in den Polymerisationsreaktor eingeleitet wird, reguliert wird.

**12.** Verfahren zur Herstellung eines Olefin-Polymers nach einem der Ansprüche 1 bis 11, wobei die Übergangsmetallverbindung des Metallocen-Typs von einem anorganischen Träger getragen wird.

**13.** Verfahren zur Herstellung eines Olefin-Polymers nach Anspruch 12, wobei der anorganische Träger ein Ton, Tonmineral oder eine ionenaustauschbare lamellare Verbindung ist.

**14.** Verfahren zur Herstellung eines Olefin-Polymers nach einem der Ansprüche 1 bis 13, wobei die Übergangsmetallverbindung des Metallocen-Typs Cyclopentadienyl-Ringe, die nicht miteinander vernetzt sind, enthält.

**15.** Verfahren zur Herstellung eines Olefin-Polymers nach einem der Ansprüche 1 bis 13, wobei die Übergangsmetallverbindung des Metallocen-Typs Cyclopentadienyl-Ringe, die miteinander vernetzt sind, enthält.

**16.** Verfahren zur Herstellung eines Olefin-Polymers nach Anspruch 15, wobei die Übergangsmetallverbindung des Metallocen-Typs Cyclopentadienyl-Ringe, die mit einer Silylen-Gruppe vernetzt sind, enthält.

**17.** Verfahren zur Herstellung eines Olefin-Polymers nach einem der Ansprüche 1 bis 16, wobei der Olefin-Polymerisationskatalysator entweder ein Katalysator, der im wesentlichen aus der Übergangsmetallverbindung des Metallocen-Typs besteht, oder ein Katalysator, der die Übergangsmetallverbindung des Metallocen-Typs und eine Organoaluminium-Verbindung in Kombination umfaßt, ist.

**18.** Verfahren zur Herstellung eines Olefin-Polymers nach einem der Ansprüche 1 bis 17, wobei das Olefin Ethylen oder ein Gemisch aus Ethylen und einem $\alpha$-Olefin mit 3 bis 18 Kohlenstoffatomen ist.

## Revendications

**1.** Procédé de production d'un polymère d'oléfine, dans lequel on utilise pour la polymérisation d'une oléfine un appareil de polymérisation ayant un réacteur de polymérisation, où on utilise un catalyseur de polymérisation d'oléfines comprenant un composé d'un métal de transition de type métallocène et on met en oeuvre la polymérisation, et où l'oléfine est introduite dans l'appareil de polymérisation, **caractérisé en ce qu'**au moins une partie de l'hydrogène présent dans l'appareil de polymérisation est sélectivement éliminée pendant la polymérisation de l'oléfine.

**2.** Procédé de production d'un polymère d'oléfine selon la revendication 1, dans lequel l'appareil de polymérisation possède le réacteur de polymérisation, où on utilise un catalyseur de polymérisation d'oléfine comprenant un composé d'un métal de transition de type métallocène et on met en oeuvre une polymérisation, et un système de circulation externe, qui est en communication avec le réacteur de polymérisation, et dans lequel l'oléfine non polymérisée est mise en circulation dans le système de circulation externe.

**3.** Procédé de production d'un polymère d'oléfine selon la revendication 1 ou 2, dans lequel l'hydrogène est éliminé par utilisation d'un catalyseur d'hydrogénation capable d'hydrogéner catalytiquement des oléfines.

**4.** Procédé de production d'un polymère d'oléfine selon la revendication 2, dans lequel le catalyseur d'hydrogénation capable d'hydrogéner catalytiquement des oléfines est placé dans le système de circulation externe, de façon à éliminer ainsi sélectivement au moins une partie de l'hydrogène.

**5.** Procédé de production d'un polymère d'oléfine selon la revendication 2, dans lequel le système de circulation externe possède un système de by-pass, et le catalyseur d'hydrogénation capable d'hydrogéner catalytiquement des oléfines est placé dans le système de by-pass prévu dans le système de circulation externe, de façon à éliminer ainsi sélectivement au moins une partie de l'hydrogène.

**6.** Procédé de production d'un polymère d'oléfine selon la revendication 5, dans lequel le système de circulation externe comprend un moyen de pompage pour un fluide qui s'y écoule, prévu dans le système de by-pass dans lequel est placé le catalyseur capable d'hydrogéner sélectivement des oléfines.

**7.** Procédé de production d'un polymère d'oléfine selon la revendication 1 ou 2, dans lequel le catalyseur d'hydrogénation capable d'hydrogéner catalytiquement des oléfines est placé dans le réacteur de polymérisation.

**8.** Procédé de production d'un polymère d'oléfine selon l'une quelconque des revendications 1 à 7, dans lequel le catalyseur d'hydrogénation capable d'hydrogéner catalytiquement des oléfines est à base de platine, de palladium, de chrome et/ou de nickel.

**9.** Procédé de production d'un polymère d'oléfine selon l'une quelconque des revendications 1 à 8, dans lequel la polymérisation d'une oléfine est mise en oeuvre dans des conditions telles que la concentration de l'hydrogène soit régulée à une valeur pouvant être obtenue par l'équation suivante :

$$C_{H2} = C_{HC} \times K_1$$

dans laquelle $C_{H2}$ représente la concentration molaire de l'hydrogène présent dans le réacteur de polymérisation, $C_{HC}$ représente la concentration molaire d'une oléfine ayant un nombre minimal d'atomes de carbone et présente dans le réacteur de polymérisation, et $K_1$ est un nombre ayant une valeur de 0,001 ou moins.

**10.** Procédé de production d'un polymère d'oléfine selon la revendication 9, dans lequel la concentration de l'hydrogène est régulée par régulation du rapport entre le débit dans le système de circulation externe et le débit dans le système de by-pass dans le procédé selon la revendication 5.

11. Procédé de production d'un polymère d'oléfine selon la revendication 9, dans lequel la concentration de l'hydrogène est soumise à une régulation plus poussée par introduction d'hydrogène dans le réacteur de polymérisation et régulation de la concentration de l'hydrogène introduit dans le réacteur de polymérisation.

12. Procédé de production d'un polymère d'oléfine selon l'une quelconque des revendications 1 à 11, dans lequel le composé d'un métal de transition de type métallocène est supporté par un support inorganique.

13. Procédé de production d'un polymère d'oléfine selon la revendication 12, dans lequel le support inorganique est une argile, un minéral argileux, ou un composé lamellaire pouvant subir un échange d'ions.

14. Procédé de production d'un polymère d'oléfine selon l'une quelconque des revendications 1 à 13, dans lequel le composé d'un métal de transition de type métallocène contient des noyaux cyclopentadiényle qui ne sont pas réticulés l'un à l'autre.

15. Procédé de production d'un polymère d'oléfine selon l'une quelconque des revendications 1 à 13, dans lequel le composé d'un métal de transition de type métallocène contient des noyaux cyclopentadiényle qui sont réticulés l'un à l'autre.

16. Procédé de production d'un polymère d'oléfine selon la revendication 15, dans lequel le composé d'un métal de transition de type métallocène contient des noyaux cyclopentadiényle qui sont réticulés avec un groupe silylène.

17. Procédé de production d'un polymère d'oléfine selon l'une quelconque des revendications 1 à 16, dans lequel le catalyseur de polymérisation d'oléfines est soit un catalyseur constitué essentiellement du composé d'un métal de transition de type métallocène, soit un catalyseur comprenant en combinaison le composé d'un métal de transition de type métallocène et un composé organique de l'aluminium.

18. Procédé de production d'un polymère d'oléfine selon l'une quelconque des revendications 1 à 17, dans lequel l'oléfine est l'éthylène, ou un mélange d'éthylène et d'une alpha-oléfine ayant de 3 à 18 atomes de carbone.

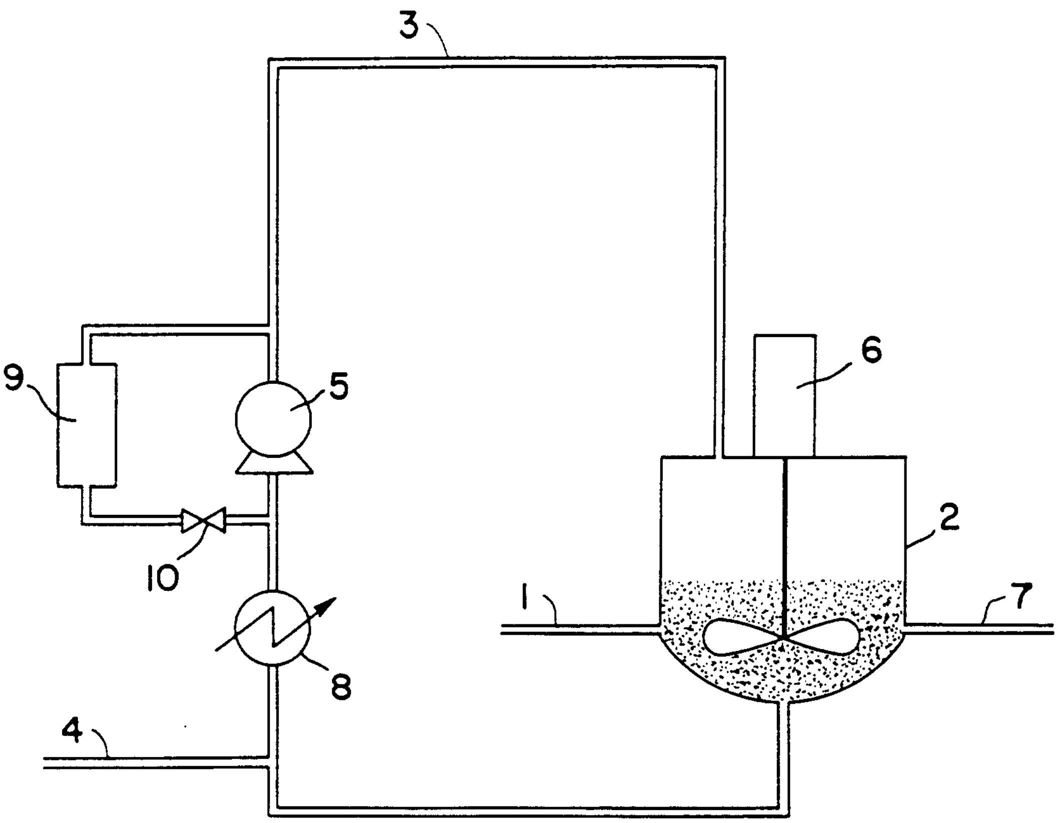


F I G. 1

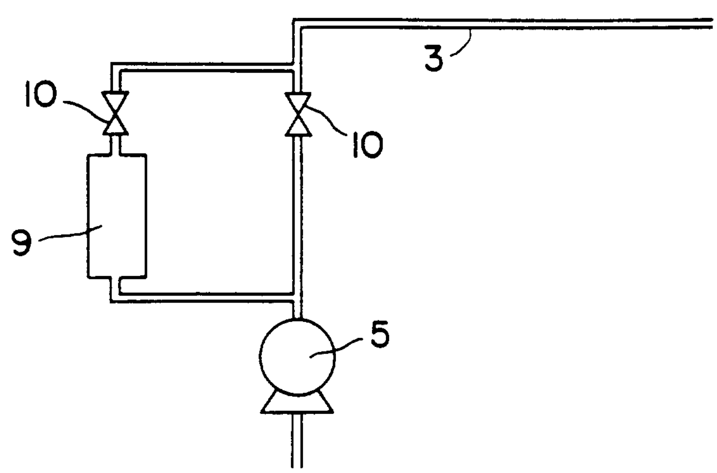


F I G. 2